# EUROPEAN PATENT APPLICATION

(11) **EP 4 607 241 A1**
(43) Date of publication of application: **27.08.2025**
(21) Application number: 25157149.3
(22) Date of filing: 11.02.2025
(51) Int. Cl.: G01S 13/87, G01S 13/42, G01S 7/03, G01S 13/931, G01S 7/00

(54) **SYNCHRONIZATION OF DISTRIBUTED RADAR SYSTEM USING DIELECTRIC WAVEGUIDE**

(30) Priority: 21.02.2024 US 202418582770
(71) Applicant: NXP B.V., 5656 AG Eindhoven (NL)
(72) Inventor: ROOVERS, Raf Lodewijk Jan, 5656AG Eindhoven (NL); MOERMAN, Cornelis Marinus, 5656AG Eindhoven (NL); BEKOOIJ, Marco Jan Gerrit, 5656AG Eindhoven (NL); KOPPELAAR, Arie Geert Cornelis, 5656AG Eindhoven (NL)
(74) Representative: Hardingham, Christopher Mark

(57) **Abstract**

A distributed radar system includes a management unit, a plurality of distributed radar units, and a dielectric waveguide network comprising a plurality of dielectric waveguides coupling the management unit to the plurality of distributed radar units. The management unit is configured to generate a reference signal for synchronization of operations of the plurality of distributed radar units. At least one of the distributed radar units may be configured to generate a digital data signal representative of results of a radar sensing operation of the distributed radar unit, the dielectric waveguide network may be configured to propagate a representation of the digital data signal to the management unit, and the management unit may be configured to control at least one operation of the distributed radar system based on the digital data signal.

## Description

### BACKGROUND

Radar systems generally operate on the basis of the transmission of a signal (often referred to as an "illumination signal") and processing of a resulting received signal (often referred to as a "reflected signal") that is a representation of the signal as reflected or scattered by one or more objects in the environment. Coherent radar systems utilize the frequency difference between the illumination signal and the resulting reflected signal to determine a distance metric for the detected object. Phase differences of the reflected signal between receive antennas is used to determine a metric for the direction of arrival (DoA) of the reflected signal. As such, accurate measurement of the frequency difference and phase differences, and thus accurate measurement of the distance metric and the DoA metric, is often dependent on accurate synchronization between generation of the illumination signal and processing of the reflected signal.

Distributed radar systems, such as Advanced Driver Assistance System (ADAS)-based automotive radar systems, utilize multiple radar units for environmental object detection. Sufficient synchronization can be difficult to achieve in such distributed radar systems, in which multiple radar units ideally would be driven using the same fully-synchronized reference signals; that is, reference signals with the same frequency, phase, and time base. However, conventional mechanisms for distributing a common reference signal to multiple radar units, such as coaxial cable-based networks or optical fiber-based networks, typically introduce additional phase noise, which can render the distributed system insufficiently synchronized to maintain coherency. Moreover, such conventional approaches can be complex to implement and consume excess power. These obstacles often lead designers to implement a distributed radar system so that the individual radar units generate a local reference signal from a local crystal oscillator or other signal source, with the resulting distributed radar system thus being non-coherent.

### SUMMARY

According to a first aspect, there is disclosed herein, a distributed radar system comprising: a management unit; a plurality of distributed radar units; and a dielectric waveguide network comprising a plurality of dielectric waveguides coupling the management unit to the plurality of distributed radar units; wherein the management unit is configured to generate a reference signal for synchronization of operations of the plurality of distributed radar units; and the dielectric waveguide network is configured to propagate a representation of the reference signal to each of the distributed radar units of the plurality of distributed radar units.

In one or more embodiments, the reference signal comprises one of a continuous waveform (CW) signal or a frequency modulated continuous waveform (FMCW) signal. In one or more such embodiments, the reference signal has a carrier frequency equal to a frequency of a radar illumination signal generated by at least one distributed radar unit based on the reference signal.

In one or more embodiments, each dielectric waveguide includes a dielectric core at least partially surrounded by at least one cladding layer. In one or more such embodiments, the dielectric core is composed of at least one of: polytetrafluoroethylene, polyethylene, polypropylene, or polystyrene. The at least one cladding layer may be composed of at least one of a polymer, a metal, or a metal alloy.

In one or more embodiments, the management unit is further configured to introduce time stamp information into the reference signal through modulation of the reference signal. In one or more such embodiments, at least one distributed radar unit of the plurality of distributed radar units is configured to determine the time stamp information from the received representation of the reference signal and to control a timing of at least one radar operation of the distributed radar unit based on the time stamp information.

In one or more embodiments, the dielectric waveguide network has a parallel star topology having a plurality of dielectric waveguides, each dielectric waveguide terminating at the management unit at one end and terminating at a corresponding distributed radar unit at an opposing end. In one or more such embodiments, wherein the management unit comprises: a splitter having an input to receive the reference signal and a plurality of outputs, each output to provide a representation of the reference signal; and a plurality of waveguide interfaces, each waveguide interface coupled to a corresponding output of the plurality of outputs of the splitter and further coupled to a first end of a corresponding dielectric waveguide of the plurality of dielectric waveguides, the waveguide interface having at least one launcher for launching an analog signal corresponding to a received representation of the reference signal as an electromagnetic signal for propagation to a proximal end of the dielectric waveguide.

In one or more embodiments, the dielectric waveguide network has a branched star topology having a first dielectric waveguide having one end coupled to the management unit and an opposing end coupled to one of the distributed radar units, and a plurality of second dielectric waveguides, each of the other dielectric waveguides having one end coupled to the first dielectric waveguide and an opposing end coupled to a corresponding distributed radar unit. In one or more such embodiments, the management unit comprises: a waveguide interface coupled to a proximal end of the first dielectric waveguide, the waveguide interface having at least one launcher for launching an analog signal corresponding to a representation of the reference signal as an electromagnetic signal for propagation to a proximal end of the dielectric waveguide.

In one or more embodiments, each distributed radar unit comprises: a waveguide interface coupled to a proximal end of a corresponding dielectric waveguide of the dielectric waveguide network and comprising at least one launcher and at least one amplifier to convert an electromagnetic signal received from the dielectric waveguide to a corresponding analog signal; and wherein the distributed radar unit is configured to control at least one radar operation of the distributed radar unit based on a representation of the reference signal generated from the analog signal.

In one or more embodiments: at least one distributed radar unit is configured to generate a digital data signal representative of results of a radar sensing operation of the distributed radar unit; the dielectric waveguide network is configured to propagate a representation of the digital data signal to the management unit; and the management unit is configured to control at least one operation of the distributed radar system based on the digital data signal.

According to a second aspect, there is provided a vehicle comprising an advanced driver assistance system having the distributed radar system as described above.

According to a third aspect, there is provided method comprising: generating, at a management unit, a reference signal; transmitting a representation of the reference signal from the management unit to each of a plurality of distributed radar units via a dielectric waveguide network comprising a plurality of dielectric waveguides; and receiving, at each distributed radar unit, the representation of the reference signal from the dielectric waveguide network and controlling one or more radar operations of the distributed radar unit based on the received representation of the reference signal.

In one or more embodiments, the method further comprises: modulating, at the management unit, the reference signal to introduce time stamp information into the reference signal; and controlling, at a distributed radar unit, a timing of at least one radar operation of the distributed radar unit based on time stamp information from a received representation of the reference signal.

In one or more embodiments: the dielectric waveguide network has a parallel star topology having a plurality of dielectric waveguides, each dielectric waveguide terminating at the management unit at one end and terminating at a corresponding distributed radar unit at an opposing end; and transmitting a representation of the reference signal from the management unit to each of the distributed radar units comprises: generating a plurality of representations of the reference signal at the management unit; and launching, at a corresponding waveguide interface of a plurality of waveguide interfaces of the management unit, an electromagnetic signal representative of a corresponding representation of the reference signal into a corresponding dielectric waveguide of the plurality of waveguides using at least one launcher of the waveguide interface.

In one or more embodiments; the dielectric waveguide network has a branched star topology having a first dielectric waveguide having one end coupled to the management unit and an opposing end coupled to one of the distributed radar units, and a plurality of second dielectric waveguides, each of the other dielectric waveguides having one end coupled to the first dielectric waveguide and an opposing end coupled to a corresponding distributed radar unit; and transmitting a representation of the reference signal from the management unit to each of the distributed radar units comprises: launching, at a waveguide interface of the management unit, an electromagnetic signal representative of the reference signal into the first dielectric waveguide using at least one launcher of the waveguide interface.

In one or more embodiments, the method further comprise: generating, at a distributed radar unit, a digital data signal representative of results of a radar sensing operation of the distributed radar unit; propagating a representation of the digital data signal to the management unit via the dielectric waveguide network; and controlling, at the management unit, at least one operation of the distributed radar system based on a received representation of the digital data signal.

### BRIEF DESCRIPTION OF THE DRAWINGS

The present disclosure is better understood, and its numerous features and advantages made apparent to those skilled in the art, by referencing the accompanying drawings. The use of the same reference symbols in different drawings indicates similar or identical items.
FIG. 1 is a block diagram of a distributed radar system utilizing a dielectric waveguide network for distribution of a reference signal in accordance with some embodiments.
FIG. 2 is a block diagram of an alternative implementation of the distributed radar system of FIG. 1 utilizing a different network topology for the dielectric waveguide network in accordance with some embodiments.
FIG. 3 is a hardware diagram of a radar management unit of the distributed radar system of FIGs. 1 and 2 in accordance with some embodiments.
FIG. 4 is a hardware diagram of a distributed radar unit of the distributed radar system of FIGs. 1 and 2 in accordance with some embodiments.
FIG. 5 is a flow diagram illustrating a method of operation of the distributed radar system of FIGs. 1-4 in accordance with some embodiments.

### DETAILED DESCRIPTION

Some conventional distributed radar systems use coaxial cables or optical fibers to distribute a reference signal to multiple radar units. However, a coaxial cable-based solution typically is impractical for use in transmitting a reference signal at the same carrier frequency as the illumination signal as it requires additional mixers and other circuitry at the receiving radar units, which can introduce additional unpredictable phase noise. Optical fiber-based distribution solutions require electrical-to-optical conversion circuitry at the transmit side and optical-to-electrical conversion circuitry at the receive side, and this circuitry increases complexity and power consumption, and may be prone to introducing additional phase noise. With the additional phase noise introduced by such conventional solutions, significant uncertainty in the time base is introduced, and thus either coherency is effectively lost or additional mechanisms, such as phase offset estimation, is utilized to attempt to mitigate for the additional time base uncertainty, thereby increasing the complexity, cost, and inefficiency of such systems. Moreover, this conversion circuitry often is not capable of being fabricated on the same chip or module as the other circuitry, and thus requiring a less compact, more complex multi-module approach.

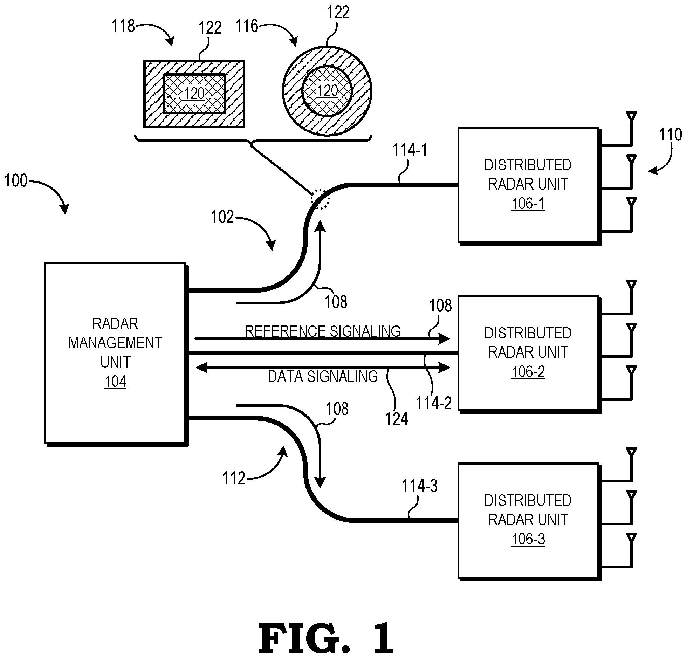

FIGs. 1-5 depict systems and methods for reference signal distribution in a distributed radar system using a network of one or more dielectric waveguides for transmission of a reference signal from a management unit to one or more destination radar units, wherein the management unit may be a centralized control unit that does not perform any radar illumination or radar sensing operations directly or the management unit may be another radar unit (that is, a leader radar unit) that also performs radar operations. The one or more dielectric waveguides, in embodiments, are implemented as a dielectric core (e.g., a polymer fiber) and may be surrounded by one or more cladding layers (which may be dielectric or conductive), and which utilize total internal reflection (TIR) for transmitting an electromagnetic (EM) signal along the length of the dielectric core. At the transmit side, the management unit utilizes one or more launchers and associated circuitry to launch the reference signal into a transmit side of the dielectric waveguide network in the form of a radio frequency (RF) signal, whereupon the RF signal is conveyed along one or more dielectric waveguides via total internal reflection of the corresponding polymer fiber to one or more of radar units. At a receive side of the dielectric waveguide network, a distributed radar unit uses a corresponding launcher/antenna to receive the RF signal from a connected dielectric waveguide and then utilize the received signal as a local reference signal.

The reference signal, in implementations, is a continuous waveform (CW) signal, such as a sine wave. In other implementations, the reference signal is a modulated radar signal that is to be used by the radar units as the illumination signal, such as a frequency-modulated continuous wave (FMCW) signal or a pulsed (or chirp) signal. In either approach, the frequency of the reference signal may be at the "radar frequency" of the illumination signals to be generated from the reference signal, or below or above this radar frequency, and subsequently converted to the radar frequency using frequency multipliers or dividers, but with a lower multiplier factor, and thus less potential phase noise introduced, due to the higher-frequency transmission capabilities of the dielectric waveguide. Moreover, the waveform of the reference signal may be modulated, in either or both of frequency or amplitude, in order to provide time stamping signaling, which may be used by the radar units in order to synchronize start times or other time bases.

In at least one embodiment, the dielectric waveguide network utilizes a branched star topology in which a single dielectric waveguide is coupled to the management unit, and this single dielectric waveguide branch in turn is connected to multiple other dielectric waveguide branches, each of which terminates at a corresponding radar unit. In another embodiment, the dielectric waveguide network utilizes a parallel star topology, in which multiple dielectric waveguides extend between the management unit and the multiple radar units, with each dielectric waveguide terminating at the management unit at one end and terminating at a corresponding radar unit at the other end. In still other embodiments, the dielectric waveguide network utilizes a ring topology.

Further, in some implementations, in addition to utilizing the dielectric waveguide network for distributing the reference signal to the radar units, the dielectric waveguide network also is used to communicate data, either unidirectionally from the radar units to the management unit or vice versa, or bidirectionally between the radar units and the management unit, such as radar sensing data from the radar units representing the results of processing of the received signals reflected from object(s) in the environment or control data from the management unit for use by the radar units in configuring or controlling their operation.

FIG. 1 illustrates a distributed radar system 100 employing a dielectric waveguide (DWG) network 102 for distribution of reference signaling in accordance with some implementations. The distributed radar system 100 ("system 100" for brevity) includes a radar management unit 104 connected to a plurality of distributed radar units 106 ("radar units 106" for brevity) via the DWG network 102. For ease of illustration and description, the system 100 is depicted as having three radar units 106, enumerated radar unit 106-1, 106-2, and 106-3. However, in other implementations two radar units 106 may be employed or more than two radar units 106 may be employed. The radar units 106 are configured to operate as distributed radar units for the system 100 by performing radar operations, including one or both of an illumination operation by which a radar illumination signal is emitted into the local environment of the radar unit 106 via a corresponding antenna array (e.g., antenna array 110 for radar unit 106-1) or a radar sensing operation in which one or more reflected signals resulting from reflection of a radar illumination signal by one or more objects in the local environment are received via the corresponding antenna array and processed by the radar unit 106 to generate digital signaling (that is, digital data) representative of a distance metric (e.g., distance, speed, or position) for some or all of the received reflected signals.

In some embodiments, the radar management unit 104 is also one of these radar units 106, but with additional reference signal generation and distribution responsibilities as described herein. In other embodiments, the radar management unit 104 operates as a central control unit for the system 100 and does not have any direct radar illumination or radar sensing capabilities; that is, the radar management unit 104 is not one of the distributed radar units 106. In such embodiments, the radar management unit 104 operates to control the overall operation of the distributed radar units 106 as well as to process the radar sensing data provided by the distributed radar units 106 from corresponding radar sensing operations to provide environmental characterization data that can be acted upon by other components within the system 100 (not shown). For example, in some embodiments, the system 100 is part of an ADAS for an automobile or other vehicle, with the radar units 106 distributed at the periphery of the vehicle for the purposes of detecting objects in the local environment of the vehicle using radar illumination/reflection, and processing received reflected signals to determine data representative of one or more of a distance, position, speed, or shape of one or more objects, and the ADAS further includes one or more processors executing software that utilize this resulting data to control one or more operations of the vehicle, such as displaying radar imagery of detected objects, controlling one or more driving aspects of the vehicle (e.g., emergency braking or adaptive cruise control), and the like.

In implementations, the system 100 is a coherent distributed radar system in which the radar illumination operations and the radar sensing operations of the radar units 106 are highly correlated from the use of effectively synchronized reference signaling. This synchronized reference signaling is used for both radar illumination signal generation and processing of received reflected signals to extract object distance/speed metrics. The synchronization of this reference signaling is facilitated by the transmission of the reference signal 108 from the radar management unit 104 to each of the radar units 106 via the DWG network 102. In the illustrated implementation of FIG. 1, the DWG network 102 has a parallel star topology 112 in which a separate dielectric waveguide (DWG) 114 connects a corresponding radar unit 106 to the radar management unit 104. Thus, in the depicted implementation, the parallel star topology 112 includes a DWG 114-1 connecting the radar management unit 104 and the radar unit 106-1, a DWG 114-2 connecting the radar management unit 104 and the radar unit 106-2, and a DWG 114-3 connecting the radar management unit 104 and the radar unit 106-3. Each DWG 114 is configured to facilitate propagation of electromagnetic (EM) signaling with relatively low magnitude loss and low insertion loss at millimeter wave (mmW) frequencies (30 GHz to 300 GHz) or even higher frequencies.

As shown by enlarged cross-sections 116 and 118, in some implementations, each DWG 114 may be implemented in a cable form factor composed of a dielectric core 120, which may be solid or hollow. In some embodiments, the dielectric core 120 is enclosed by at least one cladding layer 122 (that is, a jacket) partially or fully enclosing the dielectric core 120, whereas in other embodiments, cladding layers are omitted. The dielectric core 120 may be extruded, laminated, cast, or otherwise formed, with a solid or hollow core, and may be composed of any of a variety of polymers or other suitable dielectric materials, such as polytetrafluoroethylene (PTFE, also known by the trade name "Teflon"), polyethylene (PE), polypropylene (PP), polystyrene (PS), and the like. Typically, the material of the dielectric core fiber 120 has a relatively low dielectric constant (Dk) and a relatively low insertion loss (e.g., around 5 decibels (dB) or less) and is suited for the propagation of an EM signal at microwave frequencies or higher (that is, at the same or similar frequencies employed for the radar illumination signal(s)). The at least one cladding material may be composed of one or more dielectric materials (e.g., open-cell or closed-cell foam, such as expanded PTFE, PP, PE, PS, and the like), one or more metals (e.g., copper (Cu) or silver (Ag)), one or more metal alloys (copper alloy), or a combination thereof. As shown by cross-section 116, the DWG 114 may have a circular or ovoid cross-section, with the dielectric core 120 comprising a dielectric core fiber with a circular or otherwise ovoid cross-section and at least one cladding layer 122 with a similar circular or otherwise ovoid cross-section. As shown by cross-section 118, the DWG 114 instead may have a rectangular cross-section, with the dielectric core 120 comprising a dielectric core fiber with a rectangular cross-section and the one or more cladding layers 122 with rectangular or ovoid cross-sections. One additional aspect of a DWG 114 with dielectric core 120 having a rectangular cross-section is that either or both orthogonal polarizations for the transmitted signaling may be employed. Other cross-sections, such as triangular or another n-sided polygon, likewise may be employed. One such example implementation of the DWG 114 includes a polymer microwave fiber (PMF) DWG.

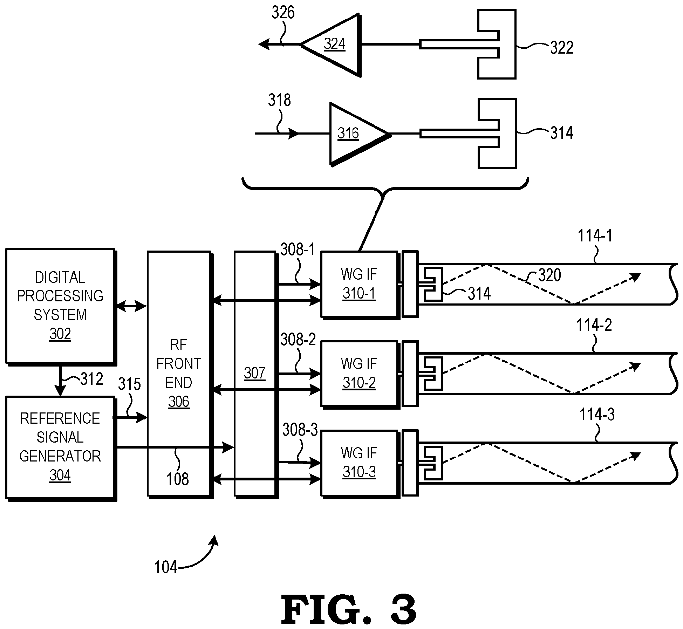

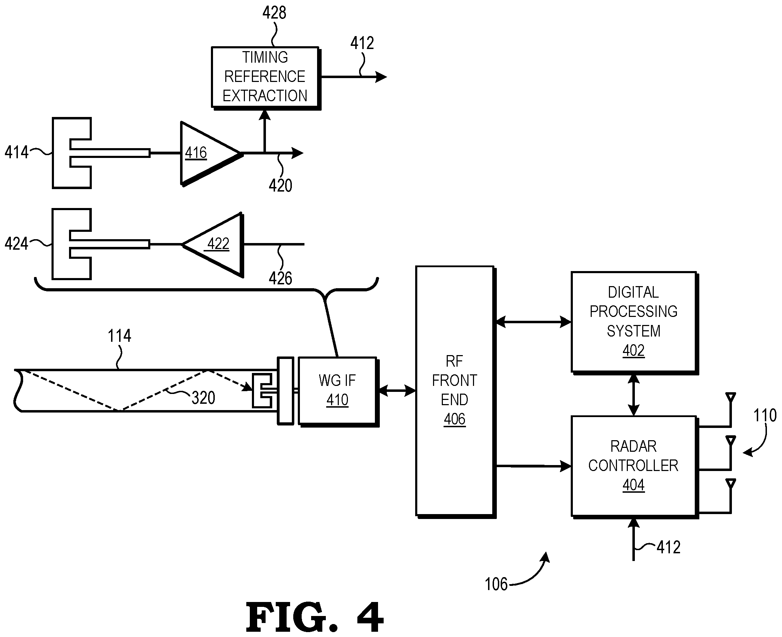

In the parallel star topology 112 of the DWG network 102 of FIG. 1, the radar management unit 104 distributes the reference signal 108 (or duplicate representations thereof) to the proximal end of each corresponding DWG 114 via a signal splitter or other signal distribution component (see FIG. 3). As described in greater detail with reference to FIG. 3, for each of the DWGs 114-1, 114-2, and 114-3, the radar management unit 104 utilizes a corresponding set of one or more launchers (i.e., antennas) to convert the reference signal 108 to an EM signal that is emitted into the proximal end of the corresponding DWG 114, whereupon the DWG 114 conveys the EM signal to the distal end of the DWG 114 via TIR. As described in greater detail below with reference to FIG. 4, at the distal end (relative to the unit 104) of the DWG 114, the corresponding radar unit 106 utilizes a set of one or more launchers (i.e., antennas) to receive the EM signal as a received reference signal, which is then utilized by the radar unit 106 for use in performing one or both of radar illumination operations or radar sensing operations.

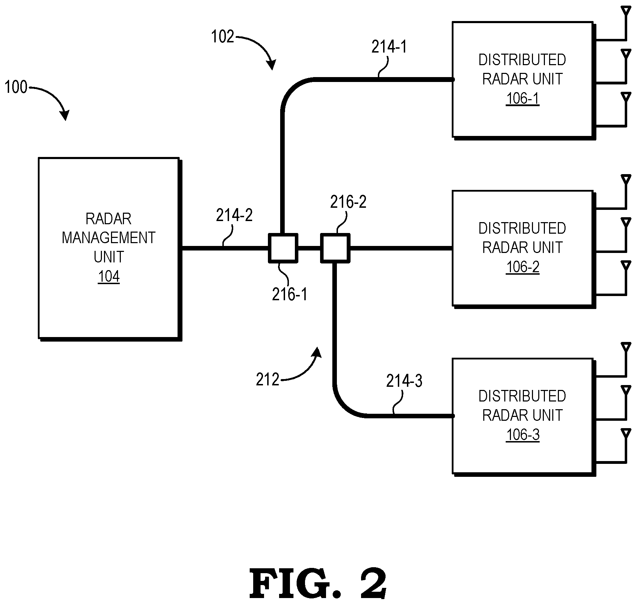

Turning briefly to FIG. 2, an alternative implementation of the DWG network 102 is shown in accordance with various embodiments. In the depicted implementation, the DWG network 102 connecting the radar management unit 104 to the radar units 106 has a branched star topology 212 in which the DWG network 102 has a single endpoint at the radar management unit 104 and single endpoints at each of the radar units 106-1, 106-2, and 106-3. For example, with the branched star topology 212, the DWG network 102 may comprise a DWG 214-2 connecting the radar management unit 104 at one end to the radar unit 106-2 at the other end, as well as a DWG 214-1 electromagnetically coupled and otherwise coupled to the DWG 214-2 via a splitter 216-1 (that is, a tap) at one end and to the radar unit 106-1 at the other end, and a DWG 214-3 electromagnetically coupled and otherwise coupled to the DWG 214-2 via a splitter 216-2 at one end and to the radar unit 106-3 at the other end. The splitters 216-1 and 216-2 operate to distribute signaling conducted via the DWG 214-2 from the radar management unit 104 to the radar units 106-1 and 106-3, respectively, and to distribute signaling conducted from the radar units 106-1 and 106-3, respectively, via the DWGs 214-1 and 214-3 to the radar management unit 104 via the DWG 214-2. Note that although two splitters 216-1 and 216-2 are shown to provide a 1-to-3 and 3-to-1 connection, in other embodiments a single 3-way splitter may be employed to connect both the DWG 214-1 and DWG 214-3 to the DWG 214-2, and vice versa.

In the branched star topology 212 of FIG. 2, the radar management unit 104 converts the reference signal 108 to a EM signal via one or more launchers at the proximal end of the DWG 214-2, and the resulting EM signal is then propagated to the distal ends (relative to the radar management unit 104) of the DWGs 214-1, 214-2, and 214-3 via TIR and the splitters 216. At each distal end, the corresponding radar unit 106 utilizes a set of one or more launchers (i.e., antennas) to receive the EM signal as a received reference signal, which is then utilized by the radar unit 106 for use in performing one or both of radar illumination operations or radar sensing operations.

Ideally, the path lengths between the radar management unit 104 and each radar units 106 via the DWG network 102 are equal regardless of particular topology employed, such that there is no relative time delay in receipt of the propagated representation of the reference signal 108 received at one radar unit 106 relative to receipt of a propagated representation of the reference signal 108 at another radar unit 106. However, in implementation various constraints may result in different path lengths between the radar management unit 104 and the radar units 106. In such instances, should the path length differences result in timing differences for receipt of the propagated representations of the reference signal 108 that may risk satisfactory operation of the system 100, then in some embodiments the radar units 106 may employ timing delay circuitry so as to compensate for the timing differences introduced by different path lengths, as described below.

Returning to FIG. 1, operation of the system 100 is further described. It will be appreciated that the reference signal 108 may take any of a variety of forms. For example, the radar management unit 104 may generate the reference signal 108 as a continuous wave (CW) signal or a frequency modulated continuous wave (FMCW) signal as is known in the art. Because the DWGs employed in the DWG network 102 typically are capable of mmW frequencies, the carrier frequency (or frequency range) of the CW signal or FMCW signal may be set to the radar frequency employed by the illuminating radar units 106 for the radar illumination signals launched by these radar units 106. For example, if the illuminating radar units 106 employ a radar frequency of 77 GHz for the radar illumination signal(s), then the radar management unit 104 may generate the reference signal 108 as a CW signal or FMCW signal having a carrier frequency of 77 GHz. In other embodiments, the carrier frequency may be set to lower than the radar frequency or higher than the radar frequency, in which case the radar units 106 may employ frequency multipliers or dividers to convert the reference signal 108 to the radar frequency.

In addition to generating the reference signal 108 and distributing the same reference signal 108 via the DWG network 102 in a manner such that the frequency, time-base, and phase noise is substantially preserved, the radar management unit 104 also may utilize modulation of the reference signal 108 to convey additional information. For example, coherent distributed radar sensing often relies on accurate time base synchronization in addition to accurate phase/frequency synchronization. For example, start times for radar illumination signal generation often are synchronized across multiple distributed illuminating radar units. As such, the radar management unit 104 may use one or both of amplitude modulation or frequency modulation to introduce time stamping into the reference signal 108 using any of a variety of known techniques, and the radar units 106 may operate to detect the time stamping present in this additional modulation and synchronize the timing of their respective operation accordingly.

Moreover, in addition to distribution of the reference signal 108, the DWG network 102 is also utilized to facilitate data communications. For example, the radar data generated by each sensing radar unit 106 may be transmitted to the radar management unit 104 via the DWG network 102 as EM data signaling 124 using any of a variety of network protocols or data transmission protocols. Further, control or configuration information may be transmitted from the radar management unit 104 to one or more of the radar units 106 as EM data signaling 124 using the DWG network 102. For example, the DWG network 102 and associated physical interfaces at the radar management unit 104 and the radar units 106 may be implemented as the physical (PHY) layer of an Ethernet-based communications network between the units 104 and 106.

FIG. 3 illustrates a hardware configuration of the radar management unit 104 of the system 100 of FIG. 1 in accordance with some embodiments. In the depicted example, the radar management unit 104 includes a digital processing system 302, a reference signal generator 304, a RF front end 306, a replicator 307, and a plurality of waveguide interfaces 310, one for each of the parallel DWGs 114 of the parallel star topology 112, such as a waveguide interface 310-1 for the DWG 114-1, a waveguide interface 310-2 for the DWG 114-2, and a waveguide interface 310-3 for the DWG 114-3. In other implementations with more or fewer DWGs 114 in the DWG network 102, the radar management unit 104 would implement more or fewer waveguide interfaces 310.

The digital processing system 302 includes one or more processors, memories, input/output (I/O) devices, and other processing components configured to facilitate execution of one or more sets of instructions that, when executed, cause the digital processing system to operate to manage the overall operation of the radar management unit 104, as well as the system 100. For example, the digital processing system 302 may operate to generate configuration/control data for transmission to the radar units 106 to configure or control their operation, such as by specifying radar illumination/sensing parameters, timing parameters, and the like. The digital processing system 302 further may operate to receive radar sensing data from the radar units 106 and process the radar sensing data to control one or more operations of the system 100, such as the display of graphical information pertaining to sensed objects in the radar sensing data, to control one or more autonomous driving operations, and the like.

The reference signal generator 304 operates to generate the reference signal 108 and includes any of a variety of circuitry or other components known in the art for generating such a reference signal, such as a crystal oscillator, frequency multipliers or dividers, a phase locked loop (PLL), a delay locked loop (DLL), and the like. The reference signal generator 304 may modify one or more aspects of the reference signal 108, such as frequency or amplitude (e.g., for purposes of frequency modulation or amplitude modulation for time stamping) based on a control signal 312 provided by the digital processing system 302. The reference signal generator 304 further may generate a clock signal 315 used by the RF front end 306 for timing/synchronization. For example, the clock signal 315 may be used for timing/synchronization for the transmission or receipt of data signaling via the DWGs 114.

The RF front end 306 comprises various circuitry for facilitating conversion of digital data from the digital processing system 302 to analog signaling for transmission via the DWGs 114 and for conversion of analog signaling received from the DWGs 114 to digital data for processing by the digital processing system 302 as is known in the art. Such circuitry may include one or more of a baseband processor, a modem, a digital-to-analog converter (DAC), an analog-to-digital converter (ADC), amplifiers, filters, mixers, frequency multipliers, dividers, and the like.

The replicator 307 comprises circuitry configured to receive the reference signal 108 as an input and to output multiple representations of the reference signal 108 (that is, duplicates of the reference signal 108) as reference signals 308-1, 308-2, and 308-3 having substantially the same frequency, phase noise, and time base, such as, for example, an amplifier with multiple replicated outputs. As such, the circuitry implementing the replicator 307 is configured to introduce relatively minimal frequency, phase, and phase noise differences in the process of outputting reference signals 308-1, 308-2, and 308-3 from reference signal 108. The reference signal 308-1 is provided to the waveguide interface 310-1, the reference signal 308-2 is provided to the waveguide interface 310-2, and the reference signal 308-3 is provided to the waveguide interface 310-3.

The waveguide interfaces 310-1, 310-2, and 310-3 each comprises the physical interface between the radar management unit 104 and the DWG 114-1, 114-2, and 114-3, respectively. As such, each waveguide interface 310 includes a set of one or more launchers 314 and, in some implementations, one or more amplifiers 316 (and other circuitry, such as one or more filters) for converting an input analog signal 318 (e.g., reference signal 308-1 or an analog signal representing digital data) to an EM signal 320 that is then emitted (or "launched") into the proximal end of the corresponding DWG 114 and then propagated to the distal end via TIR. The waveguide interface 310 also can include a set of one or more launchers 322 for receiving an EM signal propagated from the distal end of the DWG 114 (that is, transmitted by the corresponding radar unit 106) and one or more amplifiers 324 and other circuitry (e.g., one or more filters) and converting the EM signal to an analog signal 326 for processing by the RF front end 306 (e.g., for conversion from an analog signal to a digital signal that is then processed by the digital processing system 302). The launcher(s) 314 for launching an EM signal and the launcher(s) 322 for receiving an EM signal may be the same or different launcher(s). The waveguide interfaces 310 further may include physical fasteners to maintain a mechanical connection with the corresponding DWG 114 as well as to properly align the proximal end of the DWG 114 with the sets of one or more launchers 314 and 322.

While FIG. 3 illustrates a hardware configuration for the radar management unit 104 using the parallel star topology 112 for the DWG network 102, a similar approach may be implemented for different topologies for the DWG network 102. For example, for the branched star topology 212 of FIG. 2 for the DWG network, the radar management unit 104 instead may utilize a single waveguide interface 310 for coupling to the single DWG 214 terminating at the radar management unit 104, and may omit the replicator 307 as the reference signal 108 does not need to be split/duplicated into multiple synchronized representations.

FIG. 4 illustrates a hardware configuration of the radar unit 106 of the system 100 of FIG. 1 in accordance with some embodiments. In the depicted example, the radar unit 106 includes a digital processing system 402, a radar controller 404, the antenna array 110, an RF front end 406 and a waveguide interface 410. The digital processing system 402 includes one or more processors, memories, I/O devices, and other processing components configured to facilitate execution of one or more sets of instructions that, when executed, cause the digital processing system 402 to operate to manage the overall operation of the radar unit 106. For example, the digital processing system 402 may operate to generate configuration/control data for controlling the radar controller 404, to process radar sensing data from the radar controller 404 (e.g., for performing the distance/speed calculations based on signaling provided by the radar controller 404), to format digital data for transmission via the corresponding DWG 114 (e.g., DWG 114-1 for radar unit 106-1) via the RF front end 406 and waveguide interface 410 (e.g., to operate as the data link layer and higher layers in accordance with an Ethernet protocol), and the like.

The radar controller 404 operates to perform one or both of radar illumination operations or radar sensing operations based on configuration information provided by the digital processing system 402, as known in the art. The wireless aspects of these operations, such as emitting a radar illumination signal or receiving a reflected signal, are performed by the antenna array 110, which may include one or more antennas, such as in a multiple input multiple output (MIMO) antenna configuration. The timing and synchronization of these operations is based on a received reference signal 412, which in turn is based on a received representation of the reference signal 108 as described in more detail below.

The RF front end 406 comprises various circuitry for facilitating conversion of digital data from the digital processing system 402 to analog signaling for transmission via the corresponding DWG 114 and for conversion of analog signaling received from the DWG 114 to digital data for processing by the digital processing system 402 as is known in the art. Such circuitry may include one or more of a baseband processor, a modem, a digital-to-analog converter (DAC), an analog-to-digital converter (ADC), amplifiers, filters, mixers, frequency multipliers, dividers, and the like.

The waveguide interface 410 comprises the physical interface between the radar unit 106 and the corresponding DWG 114. Thus, the waveguide interface 410 includes a set of one or more launchers 414 and one or more amplifiers 416 (and other circuitry, such as one or more filters) for converting an input EM signal (e.g., EM signal 320, FIG. 3) propagated from the distal end of the DWG 114 (that is, transmitted from the distal end via TIR) to the proximal end of the DWG 114 to an analog signal 420. The waveguide interface 410 also can include one or more amplifiers 422 and other circuitry (e.g., one or more filters) and a set of one or more launchers 424 for receiving an analog signal 426 from the RF front end 406 and converting the analog signal 426 to an EM signal that is launched (that is, transmitted) into the proximal end of the DWG 114 for propagation to the radar management unit 104 at the distal end of the DWG 114 via TIR. The analog signal 426 may be, for example, an analog representation of a digital signal provided by the digital processing system 402 or by the radar controller 404, and this digital signal may represent, for example, radar sensing data obtained by the radar controller 404. The launcher(s) 424 for launching an EM signal and the launcher(s) 414 for receiving an EM signal may be the same or different launcher(s). The waveguide interface 410 further may include physical fasteners to maintain a mechanical connection with the corresponding DWG 114 as well as to properly align the proximal end of the DWG 114 with the set of one or more launchers 414 and 424.

The waveguide interface 410 (or the RF front end 406) further may include a timing reference extraction module 428 having circuitry configured to extract the reference signal 412 from the analog signal 420 when the incoming EM signal 320 represents the reference signal 108 generated by the radar management unit 104. For example, the timing reference extraction module 428 can include one or more amplifiers (which may include the amplifier 416), one or more filters, and the like. Further, in embodiments in which the carrier frequency of the reference signal 108 (as represented in the received EM signal 320) is not the radar frequency, the timing reference extraction module 428 further may include frequency multiplier or a frequency divider to increase or decrease the frequency of the extracted reference signal 412 to match the radar frequency used by the radar controller 404. Further, as noted above, there may be path length differences between the various DWGs, and thus the timing reference extraction module 428 also may include circuitry for calibrating or otherwise compensating for the time delays introduced by these path length differences between the different radar units. The radar controller 404 then utilizes the reference signal 412 to control its operation. For example, the frequency and phase of the reference signal 412 is used to generate a radar illumination signal emitted by the antenna array 110 and/or is used to extract distance/speed information from a reflected signal received by the antenna array 110 so as to generate radar sensing data. Moreover, as described above, the reference signal 108, and thus the extracted reference signal 412, may include further amplitude modulation or further frequency modulation for inserting time stamp information, and this further modulation may be interpreted thusly by the radar controller 404 as time stamp information for use in synchronizing the timing of its radar illumination/sensing operations with other radar units 106 receiving their own representation of the reference signal 108 concurrently.

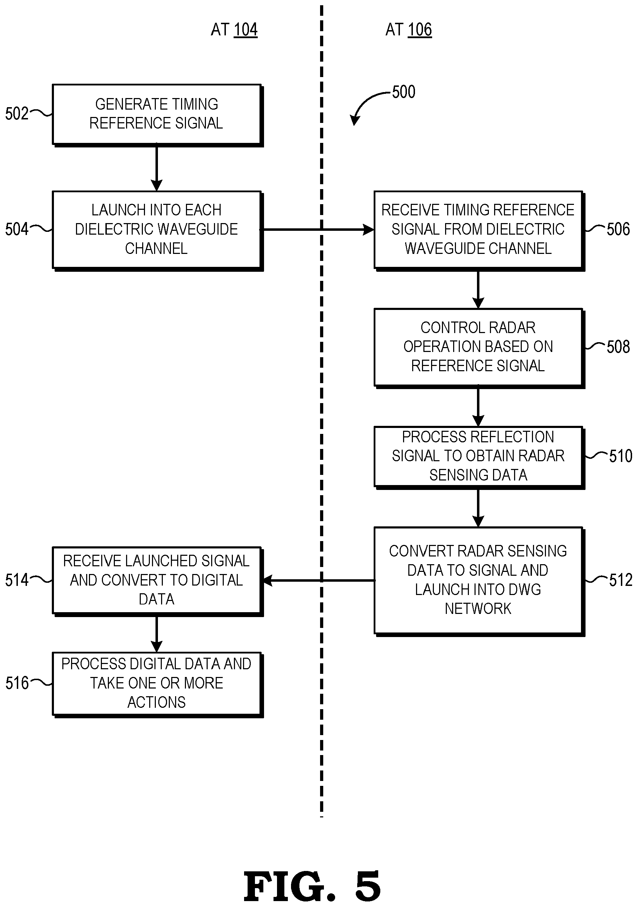

FIG. 5 illustrates an example method 500 of operation of the system 100 for parallel distribution of a reference signal to distributed radar units via a DWG network and return of radar sensing data from the radar units via the same DWG network in accordance with some embodiments. For ease of description, the method 500 is described in the example context of the system 100 of FIGs. 1-4, but is not intended to be limited to these particular implementations. The method 500 initiates at block 502 with the reference signal generator 304 of the radar management unit 104 initiating generation of the reference signal 108, which as noted above may be, for example a CW signal or FMCW signal and may have a carrier frequency at, above, or below the radar frequency utilized by the radar units 106, and further may be modulated to include time stamp information or other control information. At block 504, a representation of the reference signal 108 is concurrently launched into each DWG 114/214 of the DWG network 102 that is coupled to the radar management unit 104. For the parallel star topology 112 of FIG. 1, this includes using the replicator 307 to generate a plurality of reference signals 308 from the reference signal 108, with each reference signal 308 being launched into a corresponding DWG 114/214. For the branched star topology 212 of FIG. 2, this includes launching the reference signal 108 (or a single representation thereof) into the DWG 214 directly coupled to the radar management unit 104. The launching of a reference signal into the proximal end of a corresponding DWG 114/214 includes using the amplifier(s), launcher(s) and other RF circuitry of a corresponding waveguide interface 310 to convert the reference signal to an EM signal (e.g., EM signal 320) that is injected into the proximal end of the corresponding DWG 114/214 and then is propagated toward the distal end of the DWG 114/214 via TIR.

At block 506, each radar unit 106 receives the corresponding EM signal via the corresponding DWG 114/214 and the launcher(s), amplifiers, and other circuitry of the waveguide interface 410 of the radar unit 106 converts the EM signal to an analog signal (e.g., analog signal 420). The timing reference extraction module 428 then extracts a reference signal 412 from the analog signal and provides the extracted reference signal 412 to the radar controller 404 of the radar unit 106.

At block 508, the radar controller 404 performs one or more radar operations that are timed and otherwise synchronized based on the reference signal 412. These radar operations can include, for example, one or both of launching a radar illumination signal generated based on the reference signal 412 or receiving one or more reflected signals from one or more objects in the local environment based on one or more radar illumination signals (block 512). For example, in some configurations, each of the radar units 106 is configured to both emit a radar illumination signal and to sense reflected signals. For example, in an ADAS system, each of the radar units 106-1, 106-2, and 106-3 may be configured to emit a corresponding radar illumination signal (which may be different from the radar illumination signals emitted by the other radar units 106) and also sense reflected signals, not only from its own illumination signal but from the other radar illumination signals emitted by the other radar units 106. In other configurations, some radar units 106 are operated to only emit radar illumination signals while other radar units are operated to only sense reflected signals.

For example, in an ADAS system the radar unit 106-2 may be configured as an illumination-only radar unit while radar units 106-1 and 106-3 are configured as sense-only radar units. For the radar sensing operation (block 510), this operation typically includes receiving the reflected signal and comparing the reflected signal to the corresponding emitted radar illumination signal (e.g., by comparing phase offset) in order to determine one or more metrics for the reflecting object, such as distance and/or speed. The reference signal 412 may be used to control the radar operations in various ways. For example, the radar controller 404 may generate the radar illumination signal directly from the reference signal 412, and thus the reference signal 412 likewise is indirectly used to determine distance/speed metrics based on, for example, phase comparisons between the radar illumination signal and a received reflected signal. As another example, as explained above the reference signal 108 may be amplitude modulated or frequency modulated so as to represent time stamp information, and this modulation thus is present in the extracted reference signal 412. This time stamp information then may be used by the radar controller 404 for controlling the timing of the start of emission of a radar illumination signal (e.g., the start of a "chirp") so that the radar illumination signals of all illuminating radar units 106 are time-base synchronized as well as phase and frequency synchronized.

As explained above, the DWG network 102 further can be used as a data communications network for transmitting data from the radar management unit 104 to the radar units 106 or from the radar units 106 to the radar management unit 104. Accordingly, in implementations in which the radar unit 106 performs radar sensing operations, at block 510 the radar controller 404 can process a sensed reflected signal in view of the radar illumination signal that led to the reflected signal (e.g., by determining a phase shift) to determine one or more metrics, such as distance or speed, and the digital processing system 402 or the radar controller 404 then may convert these metrics to digital data (identified as "radar sensing data"). At block 512, a representation of this radar sensing data is transmitted to the radar management unit 104 via the DWG network 102. In embodiments, this process includes the digital processing system 402 encapsulating the radar sensing data into an appropriate data container for the network protocol used by the system 100 (e.g., in an Ethernet frame) and the RF front end 406 converting the data container and the radar sensing data contained therein into an analog signal that is then launched into the proximate end of the DWG 114/214 as an EM signal by one or more launchers of the waveguide interface 410. The EM signal is then propagated to the distal end of the DWG network 102 for reception by the radar management unit 104.

At block 514, the radar management unit 104 receives the EM signal from the DWG network 102 via one or more launchers at the corresponding waveguide interface 310 and the RF front end 306 converts the resulting analog signal to a digital data signal. At block 516, the digital processing system 302 receives the digital data signal and takes one or more actions in response, such as displaying distance/speed information represented in the digital data signal, controlling one or more autonomous driver functions based on the digital data signal, and the like.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A distributed radar system comprising:
a management unit;
a plurality of distributed radar units; and
a dielectric waveguide network comprising a plurality of dielectric waveguides coupling the management unit to the plurality of distributed radar units;
wherein the management unit is configured to generate a reference signal for synchronization of operations of the plurality of distributed radar units; and
the dielectric waveguide network is configured to propagate a representation of the reference signal to each of the distributed radar units of the plurality of distributed radar units.

2. The distributed radar system of claim 1, wherein the reference signal comprises one of a continuous waveform (CW) signal or a frequency modulated continuous waveform (FMCW) signal.

3. The distributed radar system of claim 2, wherein the reference signal has a carrier frequency equal to a frequency of a radar illumination signal generated by at least one distributed radar unit based on the reference signal.

4. The distributed radar system of any preceding claim, wherein each dielectric waveguide includes a dielectric core at least partially surrounded by at least one cladding layer composed of at least one of a polymer, a metal, or a metal alloy.

5. The distributed radar system of claim 4, wherein the dielectric core is composed of at least one of: polytetrafluoroethylene, polyethylene, polypropylene, or polystyrene.

6. The distributed radar system of any preceding claim, wherein the management unit is further configured to introduce time stamp information into the reference signal through modulation of the reference signal.

7. The distributed radar system of claim 6, wherein at least one distributed radar unit of the plurality of distributed radar units is configured to determine the time stamp information from the received representation of the reference signal and to control a timing of at least one radar operation of the distributed radar unit based on the time stamp information.

8. The distributed radar system of any preceding claim, wherein the dielectric waveguide network has a parallel star topology having a plurality of dielectric waveguides, each dielectric waveguide terminating at the management unit at one end and terminating at a corresponding distributed radar unit at an opposing end.

9. The distributed radar system of claim 8, wherein the management unit comprises:
a splitter having an input to receive the reference signal and a plurality of outputs, each output to provide a representation of the reference signal; and
a plurality of waveguide interfaces, each waveguide interface coupled to a corresponding output of the plurality of outputs of the splitter and further coupled to a first end of a corresponding dielectric waveguide of the plurality of dielectric waveguides, the waveguide interface having at least one launcher for launching an analog signal corresponding to a received representation of the reference signal as an electromagnetic signal for propagation to a proximal end of the dielectric waveguide.

10. The distributed radar system of any preceding claim, wherein the dielectric waveguide network has a branched star topology having a first dielectric waveguide having one end coupled to the management unit and an opposing end coupled to one of the distributed radar units, and a plurality of second dielectric waveguides, each of the other dielectric waveguides having one end coupled to the first dielectric waveguide and an opposing end coupled to a corresponding distributed radar unit.

11. The distributed radar system of claim 10, wherein the management unit comprises:
a waveguide interface coupled to a proximal end of the first dielectric waveguide, the waveguide interface having at least one launcher for launching an analog signal corresponding to a representation of the reference signal as an electromagnetic signal for propagation to a proximal end of the dielectric waveguide.

12. The distributed radar system of any preceding claim, wherein each distributed radar unit comprises:
a waveguide interface coupled to a proximal end of a corresponding dielectric waveguide of the dielectric waveguide network and comprising at least one launcher and at least one amplifier to convert an electromagnetic signal received from the dielectric waveguide to a corresponding analog signal; and
wherein the distributed radar unit is configured to control at least one radar operation of the distributed radar unit based on a representation of the reference signal generated from the analog signal.

13. The distributed radar system of any preceding claim, wherein:
at least one distributed radar unit is configured to generate a digital data signal representative of results of a radar sensing operation of the distributed radar unit;
the dielectric waveguide network is configured to propagate a representation of the digital data signal to the management unit; and
the management unit is configured to control at least one operation of the distributed radar system based on the digital data signal.

14. A vehicle comprising an advanced driver assistance system having the distributed radar system of claim 1.

15. A method in a distributed radar system, the method comprising:
generating, at a management unit, a reference signal;
transmitting a representation of the reference signal from the management unit to each of a plurality of distributed radar units via a dielectric waveguide network comprising a plurality of dielectric waveguides; and
receiving, at each distributed radar unit, the representation of the reference signal from the dielectric waveguide network and controlling one or more radar operations of the distributed radar unit based on the received representation of the reference signal.
